# EUROPEAN PATENT SPECIFICATION

(11) **EP 0 836 037 B1**
(45) Date of publication and mention of the grant of the patent: **19.01.2000**
(21) Application number: 96109442.2
(22) Date of filing: 12.06.1996
(51) Int. Cl.: F16H 7/12

(54) **Auto-tensioner**
Automatischer Spanner
Tendeur automatique

(43) Date of publication of application: 15.04.1998
(73) Proprietor: KOYO SEIKO CO., LTD., Osaka 542-0081 (JP)
(72) Inventor: Ohta, Hideyuki, Yao-shi, Osaka 581 (JP)
(74) Representative: Sajda, Wolf E., Dipl.-Phys.

(56) References cited:
- EP-A- 0 362 619
- GB-A- 2 263 150
- US-A- 5 073 148

## Description

### BACKGROUND OF THE INVENTION

The present invention relates to an auto-tensioner according to the preamble of claim 1. The auto-tensioner is used for imparting a predetermined tension to a belt wound about a pulley.

Conventionally an auto-tensioner has been utilized to maintain a constant tension of a belt wound about a plurality of driven shafts such as camshafts in an automotive vehicle.

There has been provided in the art an auto-tensioner wherein a pivoting member for rotatably supporting a pulley contacting a belt is forced into contact with a fixing side via a frictional member by means of a compressional resistance of an axially compressed helical torsion spring to cause a frictional resistance so that a vibrational energy of the belt may be absorbed (see, for example, Japanese Unexamined Utility Model Publication No.63-3550 (1988)).

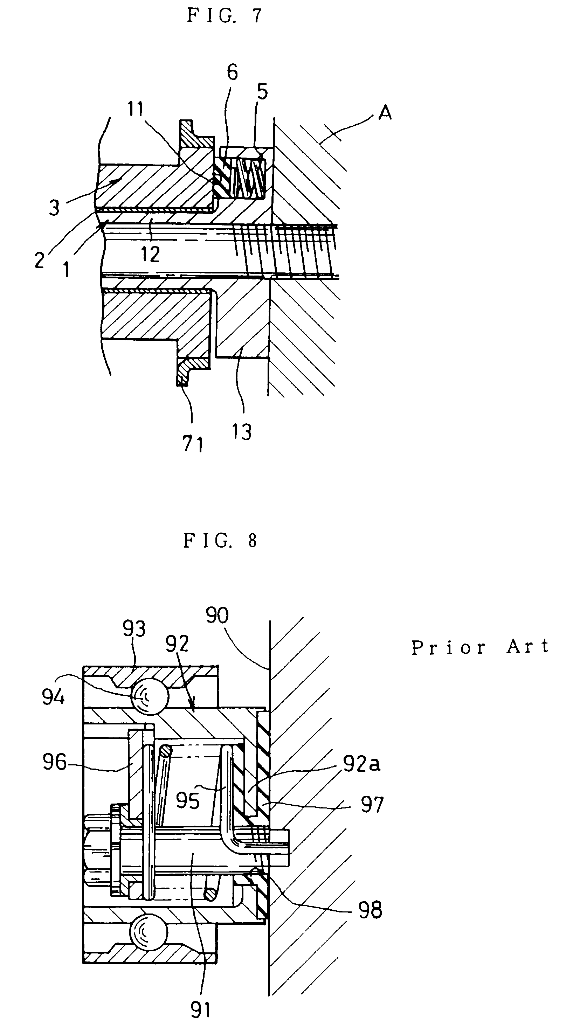

FIG.8 is a sectional view for illustrating this type of auto-tensioner. In this auto-tensioner, a cylindrical pivoting member 92 with a side plate 92a at one end thereof is pivotally fitted around the outer periphery of a fixing shaft 91 mounted to a bed 90. The pivoting member 92 is eccentric to the fixing shaft 91 and axially movably fitted with the fixing shaft 91. A pulley 93 in rollable contact with an unillustrated belt is rotatably mounted to the outer periphery of the pivoting member 92 by means of a bearing mechanism 94. The pivoting member 92 contains therein a helical torsion spring 95. The helical torsion spring 95 has an end thereof locked to the pivoting member 92 with the other end thereof locked to the bed 90 side. The aforesaid helical torsion spring 95 is, as torsionally and compressionally deformed, interposed between the side plate 92a of the pivoting member 92 and a spring receiving member 96 on the fixing shaft 91 side. Interposed between the side plate 92a of the pivoting member 92 and the bed 90 is a frictional member 97 such as made of a synthetic resin. A bushing 98 is interposed between fitting surfaces of the fixing shaft 91 and the pivoting member 92. The bushing 98 is integrally formed with the frictional member 97.

According to the auto-tensioner of the above construction, the pivoting member 92 may be forced into contact with the bed 90 via the frictional member 97 by means of the compressional resistance of the helical torsion spring 95. This imparts a predetermined pivotal resistance to the pivoting member 92, thereby absorbing the vibrational energy of the belt. Further, the torsional resistance of the helical torsion spring 95 allows the pivoting member 92 to pivot about the fixing shaft 91 so as to press the belt with a predetermined pressure.

In the auto-tensioner of the above construction, the pivoting member 92 tends to incline relative to the axis of the fixing shaft 91 because of a load applied by the belt B. This may disadvantageously cause a significant inclination of the pulley 93, resulting in disengagement of the belt from the pulley 93 if the fixing shaft 91 and the pivoting member 92 are fitted with a low precision. Accordingly, the fixing shaft 91 and the pivoting member 92 must be machined with high precision to secure the fitting precision of the both. Hence, the machining of the fixing shaft 91 and the pivoting member 92 is cumbersome, resulting in higher fabrication costs.

In addition, the frictional member 97 is apt to wear particularly on a side thereof which receives the inclination of the pivoting member 92 while an offset load tends to affect the busing 98 interposed in a fitting portion between the fixing shaft 91 and the pivoting member 92, thereby local wear tends to occur. Accordingly, a need exists for the use of an expensive, highly wear-resistant super engineering plastic material such as polyether etherketone (PEEK), polyether sulfone (PES) or the like as the material for the frictional member 97 and the bushing 98. As a result, the auto-tensioner requires even higher fabrication costs.

An auto-tensioner of the type as specified in the preamble of claim 1 is known from EP-A-0362619. In the conventional tensioner, frictional dampening means are provided consisting of friction elements and urging means mounted in a plurality of holes in corresponding support means. The position of these frictional dampening means with respect to the load imparted by a belt is not specified in this publication.

The document GB-A-2263150 discloses a belt tension adjusting device wherein in one embodiment a plurality of axial holes is formed through the peripheral wall of a pulley arm so as to surround a support shaft. A damper mechanism, consisting of a resilient member and a frictional member is mounted in each axial hole, wherein no specific location thereof is indicated with respect to the load exerted by a belt on a pulley. In another embodiment disclosed in the document GB-A-2263150 a damper mechanism is provided comprising a spline, a bolt and a coil spring which are mounted coaxially with the support shaft which supports the pulley arm.

### OBJECT AND SUMMARY OF THE INVENTION

An object of the present invention is to provide an auto-tensioner excluding a need for fitting the pivoting member in the fixing shaft with high precision and reducing material costs for the bushing and the pivoting member, thereby reducing fabrication costs.

An auto-tensioner according to the invention for achieving the above object comprises:
- a fixing shaft secured to a bed,
- a pulley in contact with a belt,
- a pivoting member pivotally fitted with the fixing shaft by means of a bushing, thereby rotatably supporting the pulley,
- at least one frictional member including a slidable surface being mounted at a right angle to the axis of the fixing shaft and being disposed locally around the fixing shaft, and
- at least one resilient member corresponding to the at least one frictional member for forcing the frictional member into contact with a frictional surface disposed either on a pivoting member side or on the fixing side, thereby imparting a pivotal resistance to the pivoting member,
and is characterized in that the frictional member(s) and the resilient member(s) are positioned and the elastic forces exerted by the resilient member(s) are such as to inhibit the pivoting member from being inclined by a load from the belt.

According to the auto-tensioner of the invention, the elastic force of the resilient member(s) may inhibit the pivoting member from being inclined by a load from the belt. This eliminates the need for fitting the fixing shaft with the pivoting member with high precision. Further, the aforesaid load of the belt may be evenly imparted to the bushing interposed in a fitting portion between the fixing shaft and the pivoting member so that a pressure on the surface of the bushing may be decreased. This excludes the need for the use of an expensive, highly wear-resistant resin material for forming the bushing. Furthermore, the aforesaid frictional member(s) are locally disposed so as to reduce the material cost thereof. Thus, the auto-tensioner may require less fabrication costs.

In carrying out our invention in one preferred mode, the auto-tensioner of the invention includes the resilient member which is formed of a resilient material and which has an end thereof serving also as the frictional member.

This mode does not require the frictional member to be constructed as an independent structure, and therefore the auto-tensioner may have a simple construction. Accordingly, the fabrication costs of the auto-tensioner may be further reduced.

In another preferred mode, the auto-tensioner of the invention is characterized by that the aforesaid frictional member and resilient member are disposed at one place on the circumference of a circle whose center is the fixing shaft.

According to this mode, the frictional member and the resilient member include a minimum number of components such that the auto-tensioner hereof has an even more simple construction.

In yet another preferred mode, the auto-tensioner hereof is characterized by that the frictional member and the resilient member are disposed at two places on the circumference of a circle whose center is the fixing shaft, which places are on a belt load point side and the opposite side thereto, or they are opposed each other across the fixing shaft and that an elastic force of the resilient member on the belt load point side is smaller than that of the resilient member on the opposite side to the belt load point.

According to this mode, a force corresponding to a difference between the elastic forces of the two resilient members may inhibit the pivoting member from being inclined by a load from the belt. Additionally, the two resilient members may be used to strongly press the frictional surface while a larger area may be provided where the frictional member is forced into contact with the frictional surface, whereby a more positive absorption of the vibrational energy of the belt may be attained.

In still another preferred mode, the auto-tensioner of the invention is characterized by that the aforesaid frictional member and resilient member are inserted into a hole defined in the pivoting member.

According to this mode, the auto-tensioner may have a compact construction. Further, the axial length of the auto-tensioner may be shorter than a case where the aforesaid frictional member and resilient member are mounted to the fixing shaft.

### BRIEF DESCRIPTION OF THE DRAWINGS

FIG.1 is a front view for illustrating an embodiment of an auto-tensioner in accordance with the invention;
FIG.2 is a sectional view of the principal portion of FIG.1 taken on line II-II;
FIG.3 is a sectional view taken on line III-III of FIG. 1;
FIG.4 is a front view for illustrating another embodiment of the invention;
FIG.5 is a sectional view of the principal portion of FIG.4 taken on line V-V;
FIG.6 is a sectional view of the principal portion of yet another embodiment of the invention;
FIG.7 is a sectional view of the principal portion of still another embodiment of the invention; and
FIG.8 is a sectional view for illustrating the conventional example.

### DETAILED DESCRIPTION OF THE PREFERRED EMBODIMENT

The present invention will be described in detail hereinbelow with reference to the attached drawings illustrating preferred embodiments thereof.

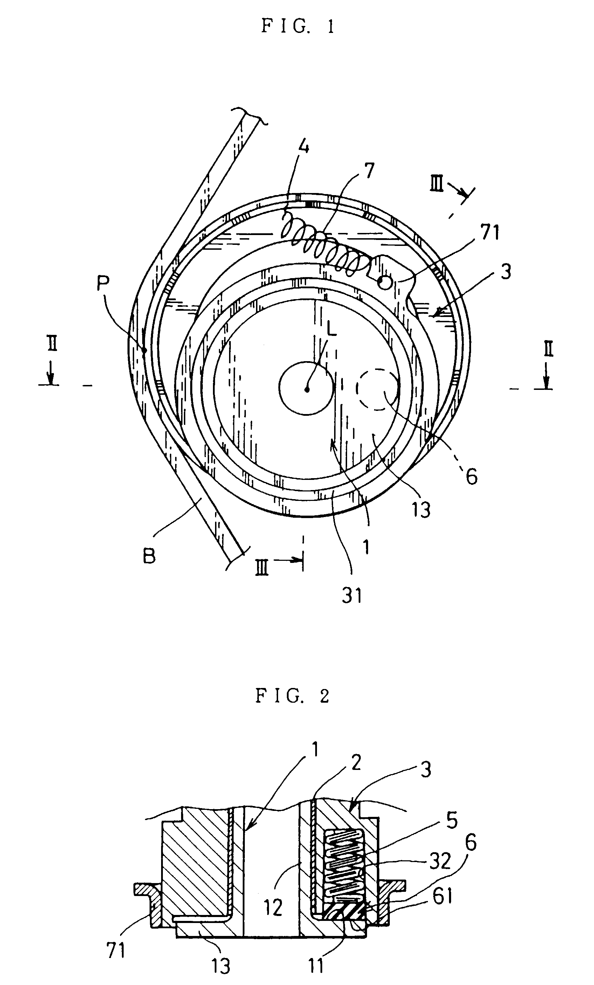

As shown in FIGs.1 through 3, the auto-tensioner of the present invention essentially comprises a fixing shaft 1 mounted to a bed A on a fixing side such as an engine, a pivoting member 3 pivotally fitted around the outer periphery of the fixing shaft 1 by means of a bushing 2, a pulley 4 rotatably mounted to the outer periphery of the pivoting member 3 by means of a bearing mechanism 8, a resilient member 5 comprised of a helical compression spring which is inserted into an end of the pivoting member 3, a frictional member 6 forced into contact with a frictional surface 11 on the fixing shaft 1 side by means of an elastic force of the resilient member 5, and a helical tension spring 7 for causing the pivoting member 3 to pivot about the fixing shaft 1 so as to press the pulley 4 against a belt B.

The aforesaid fixing shaft 1 includes a cylindrical shaft portion 12 which is formed with a flange portion 13 at an end thereof on the fixing side. One surface of the flange portion 13 constitutes the frictional surface 11 which is forced into contact with the frictional member 6. The fixing shaft 1 is secured to the bed A by a bolt 9 penetrating therethrough with the flange portion 13 set along the bed A. The fixing shaft 1 is formed, for example, by press-forming a pipe material. The bushing 2 fitted around the outer periphery of the fixing shaft 1 is formed of a synthetic resin such as nylon 46.

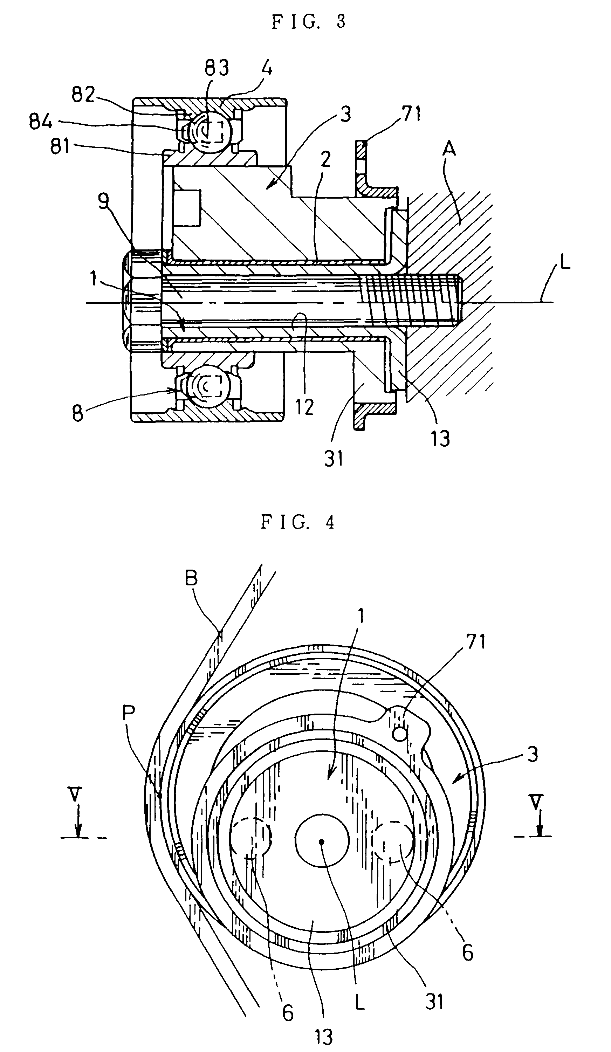

The pivoting member 3 is an eccentric cylindrical member such as formed of an aluminum die cast product. It is rotatably fitted with the fixing shaft 1 as decentered upward as seen in FIG.3. The pivoting member 3 is inhibited from moving away from the bed A by the head of the bolt 9. An end of the bed A side of the pivoting member 3 is formed with a cylinder portion 31 concentric with the axis L of the fixing shaft 1. The outer periphery of the cylinder portion 31 is press-fitted with an annular spring hook 71 for engaging the helical tension spring 7.

The bearing mechanism 8 comprises a plurality of balls 83 rollably interposed between an inner ring 81 press-fitted around the outer peripheral end of the pivoting member 3 and an outer ring 82 integrally formed with the inner periphery of the pulley 4. The respective balls 83 are retained as spaced in a retaining case 84 made of a synthetic resin.

The resilient member 5 is inserted into a hole 32 as resiliently contracted, which hole 32 is defined at the end of the bed A side of the pivoting member 3 (see FIG.2). The hole 32 extends in parallel with the axis L of the fixing shaft 1 and has an opening thereof facing the frictional surface 11 of the fixing shaft 1. The hole 32 is formed at a place opposite to a load point P of the belt B across the fixing shaft 1 and on the circumference of a circle whose center is the axis L of the fixing shaft 1 such that the elastic force of the resilient member 5 may inhibit the pivoting member 3 from being inclined by a load from the belt B.

The frictional member 6 is a disc-like member movably inserted into the hole 32 in the pivoting member 3. The frictional member 6 is formed of a super engineering plastic material having good wear-resistance such as PES, PEEK or the like. A slidable surface 61, which is an end surface of the frictional member 6, is forced into contact with the frictional surface 11 of the fixing shaft 1 as projecting from the hole 32 in the pivoting member 3. The aforesaid slidable surface 61 is crossed at a right angle to the axis L of the fixing shaft 1.

The aforesaid helical tension spring 7 for causing the pivotal movement of the pivoting member 3 is disposed between the spring hook 71 and a predetermined position of the bed A.

In the auto-tensioner having the above construction, the elastic force of the resilient member 5 may inhibit the pivoting member 3 from being inclined by a load from the belt relative to the axis L of the fixing shaft 1. This eliminates the need for fitting the pivoting member 3 with the fixing shaft 1 with high precision. Accordingly, the fitting portion between the fixing shaft 1 and the pivoting member 3 may be machined easily and less expensively. Additionally, the inclination of the pivoting member 3 is inhibited so as to allow a load of the belt B to be evenly applied to the bushing 2 interposed between the fixing shaft 1 and the pivoting member 3 and thus, a pressure on the surface of the bushing 2 may be decreased. This excludes the need for using an expensive, highly wear-resistant synthetic resin like the aforesaid super engineering plastics as the material for the bushing 2. Furthermore, the frictional member 6 is disposed at only one place around the fixing shaft 1, and therefore, an amount of the resin material thereof may be much smaller than a case where the frictional member is disposed on all the length around the fixing shaft 1. This reduces the material cost of the frictional member 6, thus contributing to reduced fabrication costs of the auto-tensioner.

In the above auto-tensioner, the frictional member 6 is pushed by the resilient member 5 and therefore, the frictional member 6 can maintain a forcible contact relationship with the slidable surface 11 even if the frictional member 6 is worn. Accordingly, instead of the aforesaid super engineering plastics, a less costly synthetic resin material such as polyurethane rubber may be used as the material of the frictional member 6.

In the aforementioned embodiment, the frictional member 6 and the resilient member 5 are inserted into the hole 32 defined in the pivoting member 3 so that the construction of the auto-tensioner may be more compact than a case where the frictional member 6 and the resilient member 5 are disposed at the outside of the outer periphery of the pivoting member 3. Also, the axial length of the auto-tensioner may be smaller than a case where the frictional member 6 and the resilient member 5 are disposed on the fixing shaft 1.

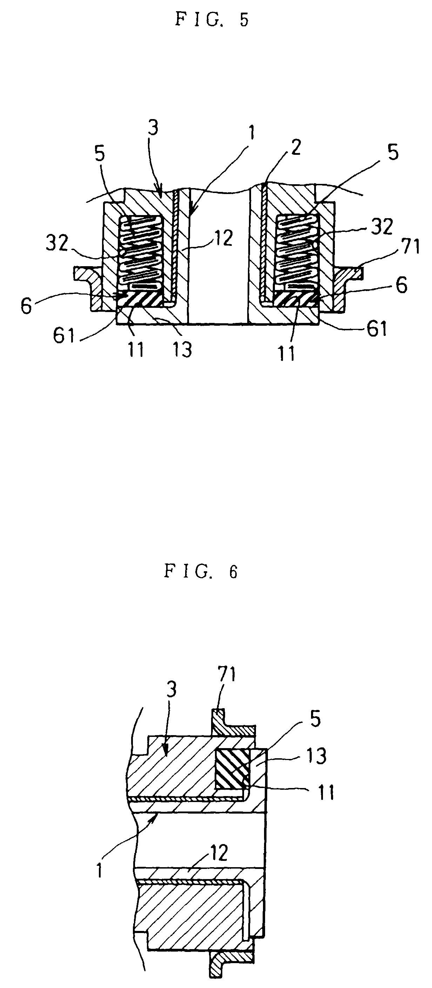

FIG.4 is a front view of another embodiment of the invention, whereas FIG.5 is a sectional view of the principal portion thereof. This embodiment differs from the above embodiment in that the resilient member 5 is also disposed on the side of the load point P of the belt B.

In this embodiment, an end of the pivoting member 3 is formed with holes 32 for inserting the resilient member 5 at two places on the circumference of a circle whose center is the axis L of the fixing shaft 1. One of the holes 32 is defined at a place opposite to the load point P of the belt B across the fixing shaft 1, while the other hole 32 is defined on the aforesaid load point P side. The resilient member 5 which is resiliently contracted is inserted into each hole 32. The aforesaid disc-like frictional members 6 are interposed between the respective resilient members 5 and the frictional surface 11 of the fixing shaft 1. It is noted that an elastic force of the resilient member 5 on the load point P side is smaller than that of the other resilient member 5, whereby the pivoting member 3 is inhibited from being inclined by the load from the belt B.

According to this embodiment, the two resilient members 5 are used to strongly press the frictional surface 11 of the fixing shaft 1, and besides, a larger area may be attained where the frictional member 6 is forced into contact with the frictional surface 11. Thus, a more positive absorption of the vibrational energy of the belt B may be provided.

FIG.6 is a sectional view of the principal portion of yet another embodiment of the invention. In this embodiment, the aforesaid resilient member 5 comprises a pillar-like body of a resilient material such as polyurethane rubber or the like, in the place of the helical compression spring. As resiliently axially contracted, the resilient member has an end thereof forced into direct contact with the frictional surface 11.

According to this embodiment, the resilient member 5 has an end thereof serving also as the frictional member, so that the auto-tensioner has a simpler construction than a case where the frictional member is formed as an independent structure. This contributes to further reduced costs of the auto-tensioner.

It is obvious to those skilled in the art that the auto-tensioner of the present invention is not limited to the above embodiments and various modifications thereof may be resorted to. For example, additional resilient members 5 and frictional members 6 may be provided; the resilient member 5, the frictional member 6 and the like may be disposed on the fixing shaft 1 side while the frictional surface 11 may be disposed on the pivoting member 3 side (see FIG.7); or the fixing shaft 1 and the bolt 9 may be formed as one piece.

The present invention may be practiced in various other forms without departing from the principal characteristics thereof. The aforementioned embodiments are illustrated by way of mere example in every aspect and should not be construed as restrictive.

## Claims

1. An auto-tensioner comprising:
- a fixing shaft (1) secured to a bed (A);
- a pulley (4) in contact with a belt (B);
- a pivoting member (3) pivotally fitted with the fixing shaft (1) by means of a bushing (2), thereby rotatably supporting the pulley (4);
- at least one frictional member (6) including a slidable surface being mounted at a right angle to the axis of the fixing shaft (1) and disposed locally around the fixing shaft (1); and
- at least one resilient member (5) corresponding to the at least one frictional member (6) for forcing the frictional member (6) into contact with a frictional surface (11) disposed either on the pivoting member (3) side or the fixing side, thereby imparting a pivotal resistance to the pivoting member (3),
characterized in that
the frictional member(s) (6) and the resilient member(s) (5) are positioned and the elastic forces exerted by the resilient member(s) (5) are such as to inhibit the pivoting member (3) from being inclined by a load from the belt (B).

2. The auto-tensioner according to claim 1, characterized in that the resilient member (5) is formed of a resilient material and has an end thereof serving also as the frictional member.

3. The auto-tensioner according to claim 1 or 2, characterized in that the resilient member (5) is a helical compression spring or a pillar-like body of resilient matter, such as polyurethane rubber.

4. The auto-tensioner according to any of claims 1 to 3, characterized in that the frictional member (6) and the resilient member (5) are disposed at one place on the circumference of a circle whose center is the fixing shaft (1).

5. The auto-tensioner according to any of claims 1 to 3, characterized in that the frictional member (6) and the resilient member (5) are disposed at two places on the circumference of a circle whose center is the fixing shaft (1), which places are provided on a belt load point (P) side and a side opposite thereto across the fixing shaft (1), and in that the elastic force of the resilient member (5) on the belt load point (P) side is smaller than that of the resilient member (5) on the opposite side to the belt load point (P).

6. The auto-tensioner according to any of claims 1 to 5, characterized in that the frictional member (6) and the resilient member (5) are inserted into a hole (32) defined in the pivoting member (3).

7. The auto-tensioner according to any of claims 1 to 6, characterized in that the fixing shaft (1) comprises a cylindrical shaft portion (12) which is formed with a flange portion (13) at an end on the fixing side, and in that one side of the flange portion (13) constitutes the frictional surface (11).

8. The auto-tensioner according to any of claims 1 to 7, characterized in that the fixing shaft (1) is mounted by a bolt (9) penetrating therethrough and fixed to the bed (A),
and in that the bushing (2) is fitted around the outer periphery of the fixing shaft (1).

9. The auto-tensioner according to any of claims 1 to 8, characterized in that the pulley (4) is rotatably mounted to the outer periphery of the pivoting member (3) by means of a bearing mechanism (8) and the pivoting member (3) is an eccentric member and pivotally fitted around the outer periphery of the fixing shaft (1).

## Patentansprüche

1. Automatische Spannvorrichtung, die folgendes aufweist:
- einen Fixierschaft (1), der an einer Basis (A) befestigt ist;
- eine Riemenscheibe (24) in Kontakt mit einem Riemen (B);
- ein Schwenkelement (3), das mittels einer Hülse (2) schwenkbar an dem Fixierschaft (1) angebracht ist, so daß die Riemenscheibe (4) drehbar gehaltert ist;
- wenigstens ein Reibungselement (6), das eine gleitend verschiebbare Fläche aufweist, die rechtwinklig zu der Achse des Fixierschafts (1) angebracht ist und lokal um den Fixierschaft (1) herum angeordnet ist; und
- mindestens ein federnd elastisches Element (5), das dem mindestens einen Reibungselement (6) entspricht, um das Reibungselement (6) in Kontakt mit einer Reibungsfläche (11) zu zwingen, die entweder auf der Seite des Schwenkelements (3) oder auf der Fixierseite angeordnet ist, um dadurch dem Schwenkelement (3) einen Schwenkwiderstand zu verleihen,
dadurch gekennzeichnet,
daß das (die) Reibungselement(e) (6) und das (die) federnd elastische(n) Element(e) (5) derart positioniert und die von dem (den) federnd elastischen Element(en) (5) ausgeübten elastischen Kräfte derart sind, daß das Schwenkelement (3) daran gehindert wird, durch eine Belastung von dem Riemen (B) geneigt zu werden.

2. Automatische Spannvorrichtung nach Anspruch 1,
dadurch gekennzeichnet,
daß das federnd elastische Element (5) aus einem federnd elastischen Material gebildet ist und ein Ende aufweist, das auch als Reibungselement dient.

3. Automatische Spannvorrichtung nach Anspruch 1 oder 2,
dadurch gekennzeichnet,
daß das federnd elastische Element (5) eine zylindrische Schraubendruckfeder oder ein säulenartiger Körper aus federnd elastischem Material, wie z.B. Polyurethangummi, ist.

4. Automatische Spannvorrichtung nach einem der Ansprüche 1 bis 3,
dadurch gekennzeichnet,
daß das Reibungselement (6) und das federnd elastische Element (5) an einer Stelle auf dem Umfang eines Kreises angeordnet sind, dessen Zentrum der Fixierschaft (1) ist.

5. Automatische Spannvorrichtung nach einem der Ansprüche 1 bis 3,
dadurch gekennzeichnet,
daß das Reibungselement (6) und das federnd elastische Element (5) an zwei Stellen auf dem Umfang eines Kreises angeordnet sind, dessen Zentrum der Fixierschaft (1) ist, wobei sich die Stellen auf einer Seite eines Riemen-Lastangriffspunkts (P) und einer gegenüberliegenden Seite befinden, die diesem über den Fixierschaft (1) hinweg gegenüberliegt,
und daß die elastische Kraft des federnd elastischen Elements (5) auf der Seite des Riemen-Lastangriffspunktes (P) geringer ist als die des federnd elastischen Elements (5) auf der dem Riemen-Lastangriffspunkt (P) gegenüberliegenden Seite.

6. Automatische Spannvorrichtung nach einem der Ansprüche 1 bis 5,
dadurch gekennzeichnet,
daß das Reibungselement (6) und des federnd elastische Element (5) in eine Öffnung (32) eingesetzt sind, die in dem Schwenkelement (3) ausgebildet ist.

7. Automatische Spannvorrichtung nach einem der Ansprüche 1 bis 6,
dadurch gekennzeichnet,
daß der Fixierschaft (1) einen zylindrischen Schaftbereich (12) aufweist, der an einem Ende auf der Fixierseite mit einem Flanschbereich (13) ausgebildet ist, und daß die eine Seite des Flanschbereichs (13) die Reibungsfläche (11) bildet.

8. Automatische Spannvorrichtung nach einem der Ansprüche 1 bis 7,
dadurch gekennzeichnet,
daß der Fixierschaft (1) mit einem Bolzen (9) angebracht ist, der den Fixierschaft (1) durchsetzt und an der Basis (A) befestigt ist,
und daß die Hülse (2) um den Außenumfang des Fixierschafts (1) herum angebracht ist.

9. Automatische Spannvorrichtung nach einem der Ansprüche 1 bis 8,
dadurch gekennzeichnet,
daß die Riemenscheibe (4) an dem Außenumfang des Schwenkelements (3) mittels eines Lagermechanismus (8) drehbar angebracht ist
und daß das Schwenkelement (3) ein exzentrisches Element ist und um den Außenumfang des Fixierschafts (1) schwenkbar angebracht ist.

## Revendications

1. Tendeur automatique comprenant :
- un arbre de fixation (1) fixé sur une base (A) ;
- une poulie (4) en contact avec une courroie (B) ;
- un élément pivotant (3) monté pivotant sur l'arbre de fixation (1) au moyen d'une douille (2), supportant ainsi en rotation la poulie (4) ;
- au moins un élément de friction (6) comprenant une surface de glissement, monté perpendiculaire à l'axe de l'arbre de fixation (1) et disposé localement autour de l'arbre de fixation (1) ; et
- au moins un élément élastique (5) correspondant au moins audit élément de friction (6) pour appliquer de force l'élément de friction (6) en contact avec une surface de friction (11) disposée, soit sur le côté de l'élément pivotant (3), soit sur le côté de fixation, opposant ainsi une résistance au pivotement à l'élément pivotant (3),
caractérisé en ce que
l'élément (les éléments) de friction (6) et l'élément (les éléments) élastique(s) (5) sont positionné(s) de telle sorte et les forces élastiques exercées par l'élément (les éléments) élastique(s) sont telles que l'élément pivotant (3) est empêché d'être incliné par une charge en provenance de la courroie (B).

2. Tendeur automatique selon la revendication 1, caractérisé en ce que l'élément élastique (5) est formé en un matériau élastique et a une extrémité servant également d'élément de friction.

3. Tendeur automatique selon la revendication 1 ou la revendication 2, caractérisé en ce que l'élément élastique (5) est un ressort de compression hélicoïdal ou un corps analogue à une colonne de matière élastique, tel qu'un caoutchouc polyuréthanne.

4. Tendeur automatique selon l'une des revendications 1 à 3, caractérisé en ce que l'élément de friction (6) et l'élément élastique (5) sont disposés en un emplacement sur la circonférence d'un cercle dont le centre est l'arbre de fixation (1).

5. Tendeur automatique selon l'une des revendications 1 à 3, caractérisé en ce que l'élément de friction (6) et l'élément élastique (5) sont disposés en deux emplacements sur la circonférence d'un cercle dont le centre est l'arbre de fixation (1), lesquels emplacements sont prévus sur un côté d'un point (P) où s'exerce une charge en provenance de la courroie et sur un côté opposé à celui-ci en travers de l'arbre de fixation (1), et en ce que la force élastique de l'élément élastique (5) sur le côté du point (P) où s'exerce la charge en provenance de la courroie est plus petite que celle de l'élément élastique (5) sur le côté opposé au point (P) où s'exerce la charge en provenance de la courroie.

6. Tendeur automatique selon l'une des revendications 1 à 5, caractérisé en ce que l'élément de friction (6) et l'élément élastique (5) sont introduits dans un trou (32) défini dans l'élément pivotant (3).

7. Tendeur automatique selon l'une des revendications 1 à 6, caractérisé en ce que l'arbre de fixation (1) comprend une portion d'arbre cylindrique (12) formée avec une portion de collerette (13) au niveau d'une extrémité sur le côté fixation, et en ce qu'un côté de la portion de collerette (13) constitue la surface de friction (11).

8. Tendeur automatique selon l'une des revendications 1 à 7, caractérisé en ce que l'arbre de fixation (1) est monté par un boulon (9) pénétrant à travers lui et est fixé à la base (A) et en ce que la douille (2) est montée autour de la périphérie extérieure de l'arbre de fixation (1).

9. Tendeur automatique selon l'une des revendications 1 à 8, caractérisé en ce que la poulie (4) est montée en rotation sur la périphérie extérieure de l'élément pivotant (3) au moyen d'un mécanisme de palier (8) et en ce que l'élément pivotant (3) est un élément excentrique et est monté pivotant autour de la périphérie extérieure de l'arbre de fixation (1).
